(19) Europäisches Patentamt / European Patent Office / Office européen des brevets

(11) **EP 4 346 440 B1**

(12) **EUROPEAN PATENT SPECIFICATION**

(45) Date of publication and mention of the grant of the patent:
**01.04.2026 Bulletin 2026/14**

(21) Application number: **22730913.5**

(22) Date of filing: **31.05.2022**

(51) International Patent Classification (IPC):
*A23L 27/20* (2016.01)    *A23L 27/21* (2016.01)
*A23L 5/30* (2016.01)    *A23L 27/26* (2016.01)

(52) Cooperative Patent Classification (CPC):
**A23L 27/26; A23L 5/34; A23L 27/2022;
A23L 27/2024; A23L 27/203; A23L 27/204;
A23L 27/2056; A23L 27/21; A23L 27/215**

(86) International application number:
**PCT/EP2022/064748**

(87) International publication number:
**WO 2022/253830 (08.12.2022 Gazette 2022/49)**

(54) **FLAVOR ENHANCER FOR PROVIDING ROASTED RED MEAT FLAVOR**

GESCHMACKSVERSTÄRKER, UM DEN GESCHMACK VON GERÖSTETEM ROTEM FLEISCH BEREITZUSTELLEN

EXHAUSTEUR DE GOÛT POUR DONNER UN GOÛT DE VIANDE ROUGE RÔTIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2021 GB 202107751**

(43) Date of publication of application:
**10.04.2024 Bulletin 2024/15**

(73) Proprietor: **Givaudan SA**
**1214 Vernier (CH)**

(72) Inventors:
• **HELBLING, Ivan**
**8400 Winterthur (CH)**
• **LOHSE, Christian**
**8330 Pfaeffikon (CH)**

(74) Representative: **Global Patents**
**Givaudan SA**
**Grafenaustrasse 7**
**6300 Zug (CH)**

(56) References cited:
**WO-A1-2018/083224    CN-A- 101 263 888
US-A1- 2018 192 680**

• **RON G. BUTTERY ET AL: "Studies on Popcorn Aroma and Flavor Volatiles", JOURNAL OF AGRICULTURAL AND FOOD CHEMISTRY, vol. 45, no. 3, 1997, US, pages 837 - 843, XP055735398, ISSN: 0021-8561, ISBN: 978-4-86233-281-3, DOI: 10.1021/jf9604807**
• **"Food Flavour Technology. 2nd ed.", 2010, BLACKWELL PUBLISHING, article JOSEF KERLER ET AL: "3 Basic chemistry and process conditions for reaction flavours with particular focus on Maillard-type reactions", pages: 51 - 88, XP055116334**
• **"Advances in Bioinspired and Biomedical Materials", vol. 543, 30 November 1993 (1993-11-30), Washington, DC, pages 449 - 456, XP055870017, ISSN: 1947-5918, ISBN: 978-0-8412-3222-8, Retrieved from the Internet <URL:https://pubs.acs.org/doi/pdf/10.1021/bk-1994-0543.ch038> [retrieved on 20220124], DOI: 10.1021/bk-1994-0543.ch038**

EP 4 346 440 B1

• LOTFY SHEREEN N ET AL: "Stability of encapsulated beef-like flavourings prepared from enzymatically hydrolysed mushroom proteins with other precursors under conventional and microwave heating", FOOD CHEMISTRY, ELSEVIER LTD, NL, vol. 187, 16 April 2015 (2015-04-16), pages 7 - 13, XP029233820, ISSN: 0308-8146, DOI: 10.1016/ J.FOODCHEM.2015.04.027

**Description**

The present invention relates to flavor enhancers for providing a roasted red meat flavor.

Flavorings are products added to food or beverages in order to impart or modify odor and/or taste. Regulation (EC) No 1334/2008 on flavorings and certain food ingredients with flavoring properties for use in/on foods was adopted on 16 December 2008 and entered into force on 20 January 2009. It lays down general requirements for safe use of flavorings and provides definitions for different types of flavorings: flavoring substances, flavoring preparations, thermal process flavorings, smoke flavorings, flavor precursors, and other flavorings.

"Flavoring preparations" are defined as follows: Flavoring preparations are flavorings other than defined chemical substances obtained from materials of vegetable, animal or microbiological origin, by appropriate physical, enzymatic or microbiological processes, either in the raw state of the material or after processing for human consumption.

"Thermal process flavorings" (commonly also called "process flavors"), on the other hand, are defined as products obtained after heat treatment from a mixture of ingredients not necessarily having flavoring properties themselves, of which at least one contains nitrogen (amino) and another is a reducing sugar.

Thus, flavoring preparations and reaction/process flavors are not a food as such; they are articles of manufacture that are intended to be added to foods or beverages to impart flavor thereto, or to modify or improve flavor in a food or beverage. They are essentially non-nutritional, that is, their substantial purpose is to impart flavor to foods or beverages, or to enhance, modify or improve the flavor of food or beverages to which they are added, not to provide nutrition.

Throughout this application, the term "flavor enhancer" is meant to encompass both flavoring preparations and thermal process flavorings as defined in Regulation (EC) No 1334/2008. Thus, the term "flavor enhancer", as used herein, covers all kinds of reaction flavors obtained by reacting an amine or a source of amine with a reducing sugar or a source of reducing sugar, irrespective of the source of these starting materials.

The present invention focuses on compositions for providing a roasted red meat flavor.

Such flavors are typically obtained by a Maillard Reaction, which is a non-enzymatic browning reaction of reducing sugars and amino functionalities (including amino acids, amides, ammonium, and ammonia) in the presence of heat. But also other reaction types may be involved in flavor synthesis, for instance Schiff base formation, Strecker degradation or caramelization reactions.

Common flavors produced as a result of the Maillard Reaction include red meat, poultry, coffee, vegetables, bread crust and roasted notes. A Maillard reaction relies mainly on sugars and amino acids, but it can also contain other ingredients including: autolyzed yeast extracts, hydrolyzed vegetable proteins, gelatin, vegetable extracts, enzyme treated proteins, meat fats or extracts and acids or bases to adjust the pH of the reaction. The reaction is generally aqueous with an adjusted pH at specific temperatures (typically 100 °C) for a specified amount of time (typically 15 mins) to produce a variety of flavors. Typical flavors yielded are chicken, pork, beef, caramel, and chocolate. However, a wide variety of nuances and intensities can be achieved by adjusting the ingredients, the temperature and/or the pH of the reaction.

Flavor enhancers typically consist of a complex multi-component blend of both volatile and nonvolatile reaction products, as well as any unreacted starting materials. Their compositional make-up can be sensitive to reaction parameters and may vary in terms of their components, or in the pattern of distribution of those components. Important reaction parameters can include precursor ingredient chemistry, reaction time and temperature, moisture, pressure, pH, and the like. If one or more of these parameters is not controlled, the flavor profile and/or coloration of the flavor enhancer can be adversely affected, for example by failure to convert all of the starting materials, or by the development of off-tastes.

In the industrial production of flavor enhancer, the skilled person must not only take into account the foregoing reaction parameters or variables, they must also take into account process engineering considerations. For example, viscosity control in reaction media is an important process parameter, which on an industrial scale will impact operations such as pumping, stirring, blending and filtering, and to facilitate these operations, it is conventional to form reaction flavors, for instance, in reaction media consisting of highly dilute aqueous slurries. Furthermore, in addition to controlling viscosity in this way, employing high levels of water can help control heat transfer and prevent over-heating or localized heating during the formation of the flavor enhancer.

Flavor enhancers may have different physical forms. For instance, they may be solid or liquid, depending on their composition and intended use.

Flavor enhancers in dry form are particularly important for reason of their physical and microbiological stability, as well as for supply chain considerations, such as ease of storage, handling, dosing, and the like. Removal of water from the reaction mixture once a flavor enhancer is formed is therefore a critical process step.

Using conventional process conditions, after cooking a slurry to create a flavoring preparation or reaction flavor in a first step, the slurry is dehydrated in a second step by spray drying or vacuum oven drying. Spray drying is relatively inexpensive, but this technique does require the use of relative large amounts of carrier material, which can be detrimental to the flavor profile and mouth feel of a finished flavor preparation. More commonly, in the second step, dehydration is accomplished using vacuum oven drying. In this case, after completion of the reaction, the slurry is transferred to drying trays and the trays are inserted into a vacuum oven, whereupon the water is evaporated by heating (usually below 100 °C) under reduced pressure. However, the time and energy required to dehydrate slurries in this way is rather wasteful of resources. The process is laborious, complex and expensive; and the dependency on long drying times and elevated temperatures means that without careful in-process control, the drying process can leave its imprint on the flavor quality and authenticity.

Solid roasted red meat flavor enhancers prepared by these conventional methods tend to be somewhat sharp and pungent if prepared by spray drying, or not very strong if prepared by vacuum oven drying.

Nevertheless, solid flavor enhancers are easy to handle and have many uses as additives in foods or beverages, and are much desired by flavor manufacturers and food and beverage manufactures alike.

There is therefore a need for solid roasted meat flavor enhancers with an improved flavor profile, which may be prepared in a fast, reliable and cost effective way.

In a first aspect, the present invention provides an improved flavor enhancer for providing a roasted red meat flavor.

In a second aspect, the present invention provides a method of imparting a roasted red meat flavor to a food product, said method comprising the step of adding to said food product the flavor enhancer of the invention.

In a third aspect, the present invention provides a method of preparing the flavor enhancer of the invention.

The flavor enhancer of the present invention comprises at least 14 of the following marker components in the indicated concentrations:

- 2-methylbutanal in a concentration of 0.50 ppm to 2.00 ppm;
- 2-methyl-1-butene-1-thiol in a concentration of 0.10 ppm to 1.00 ppm;
- 2-methyl-3-furanthiol in a concentration of 0.05 ppm to 2.00 ppm;
- 2,5-dimethylpyrazine in a concentration of 0.05 ppm to 0.50 ppm;
- 2,6-dimethylpyrazine in a concentration of 0.05 ppm to 0.50 ppm;
- 2,3-dimethylpyrazine in a concentration of 0.05 ppm to 0.30 ppm;
- 2-methyl-4,5-dihydrofuran-3-thiol in a concentration of 5.00 ppm to 12.0 ppm;
- trimethylpyrazine in a concentration of 0.10 ppm to 0.80 ppm;
- furfuryl mercaptan in a concentration of 0.05 ppm to 0.50 ppm;
- 2-acetylpyrrole in a concentration of 4.00 ppm to 20.00 ppm;
- furaneol in a concentration of 25.0 ppm to 45.0 ppm;
- nor-furaneol in a concentration of 100 ppm to 400 ppm;
- sulfurol in a concentration of 0.70% to 2.00%;
- proline-valine diketopiperazine in a concentration of 1.00 ppm to 20.0 ppm; and
- proline-isoleucine diketopiperazine in a concentration of 3.50 ppm to 30.0 ppm.

These marker components have been identified by extensive testing of various starting materials, ratios and fractions of starting materials, slurry viscosity and flowability, as well as reaction and drying conditions including energy uptake (e.g. homogenous or hotspot formation), water resorption and retention for preparing flavor enhancers, as well as meticulous analysis of the thus obtained flavor enhancers with regard to odor, taste, texture, mouthfeel, stability, and functionality and performance in creation.

Surprisingly, it was found that flavor enhancers comprising at least 14 of the above marker components, in the indicated concentrations, were able to provide a very characteristic flavor profile with meaty, roasted, caramellic, or chocolate (roast beef) notes with crispy/crusty fatty aspects desired by the food industry, which are not typically achievable by using compounding of flavor ingredients. In particular, the flavor enhancers of the present invention were found to have a unique and distinctive, complex roasted beef character with a tallow note. It provides a rich roasted meaty character in odor and taste notes with a clear marrow beef and sweet background. In comparison to conventional red meat flavor compositions prepared by (vacuum) oven drying, the flavor enhancers of the present invention are more concentrated and stronger, offering a better performance and function at significantly lower dosage.

Red meat flavor compositions prepared by spray drying tend to be quite peaky, sharp or pungent. In comparison, the flavor enhancers of the present invention are more complex, more subtle, more "home cooked", more authentic, and less "processed".

Overall, the flavor enhancers of the present invention provide a complex beefy flavor with a stronger roasted top note that allows to reduce the amount used, thereby also positively impacting the raw material costs.

They are also stable over several months at ambient temperature.

The components of the flavor enhancers may be identified by means of gas chromatography coupled to a mass spectrometer.

The concentration of the components may be determined by means of quantitative gas chromatography using a suitable detector and sample preparation. For instance, an internal standard may be used.

A feature of the present invention is that the flavor enhancer is a product that is formed externally of a food or beverage matrix. It is an article of manufacture that can impart to, or modify or improve the flavor of a food or beverage, either alone or as part of a complete flavor composition, by virtue of it being mixed with or applied to a food or a beverage. The flavor enhancer is not formed in or on a food or beverage matrix whilst the food or beverage is in the process of being heated or cooked.

The flavor enhancer of the present invention comprises at least 14 of the above fifteen marker components in the indicated concentrations. Preferably, the flavor enhancer comprises all 15 markers in the indicated concentrations.

In an embodiment, the flavor enhancer comprises 2-methylbutanal in a concentration of 0.60 ppm to 1.50 ppm, more preferably of 0.65 ppm to 1.20 ppm, and most preferably of 0.70 ppm to 1.00 ppm. For instance, the flavor enhancer comprises about 0.71, 0.88 or 1.18 ppm of 2-methylbutanal.

2-methyl-1-butene-1-thiol may be present as the cis-isomer, as the trans-isomer, or as any mixture of the two isomers. In an embodiment, the flavor enhancer comprises 2-methyl-1-butene-1-thiol in a concentration of 0.20 ppm to 0.90 ppm, more preferably of 0.30 ppm to 0.80 ppm, and most preferably of 0.50 ppm to 0.70 ppm. For instance, the flavor enhancer comprises about 0.11, 0.15, 0.58 or 0.68 ppm of 2-methyl-1-butene-1-thiol.

In an embodiment, the flavor enhancer comprises 2-methyl-3-furanthiol in a concentration of 0.10 ppm to 1.70 ppm, more preferably of 0.50 ppm to 1.50 ppm, and most preferably of 1.00 ppm to 1.30 ppm. For instance, the flavor enhancer comprises about 0.06, 0.13, 1.05 or 1.26 ppm of 2-methyl-3-furanthiol.

In an embodiment, the flavor enhancer comprises 2,5-dimethylpyrazine in a concentration of 0.10 ppm to 0.40 ppm, more preferably of 0.20 ppm to 0.35 ppm, and most preferably of 0.25 ppm to 0.30 ppm. For instance, the flavor enhancer comprises about 0.06, 0.26, 0.29 or 0.46 ppm of 2,5-dimethylpyrazine.

In an embodiment, the flavor enhancer comprises 2,6-dimethylpyrazine in a concentration of 0.10 ppm to 0.30 ppm, more preferably of 0.12 ppm to 0.25 ppm, and most preferably of 0.15 ppm to 0.20 ppm. For instance, the flavor enhancer comprises about 0.11, 0.16, 0.17 or 0.22 ppm of 2,6-dimethylpyrazine.

In an embodiment, the flavor enhancer comprises 2,3-dimethylpyrazine in a concentration of 0.06 ppm to 0.25 ppm, more preferably of 0.07 ppm to 0.10 ppm, and most preferably of 0.07 ppm to 0.08 ppm. For instance, the flavor enhancer comprises about 0.074, 0.075 or 0.225 ppm of 2,3-dimethylpyrazine.

In an embodiment, the flavor enhancer comprises 2-methyl-4,5-dihydrofuran-3-thiol in a concentration of 5.50 ppm to 10.0 ppm, more preferably of 6.00 ppm to 9.00 ppm, and most preferably of 6.50 ppm to 8.00 ppm. For instance, the flavor enhancer comprises about 1.24, 6.98, 7.64 or 7.87 ppm of 2-methyl-4,5-dihydrofuran-3-thiol.

In an embodiment, the flavor enhancer comprises trimethylpyrazine in a concentration of 0.12 ppm to 0.60 ppm, more preferably of 0.13 ppm to 0.40 ppm, and most preferably of 0.15 ppm to 0.20 ppm. For instance, the flavor enhancer comprises about 0.16, 0.17, 0.37 or 0.69 ppm of trimethylpyrazine.

In an embodiment, the flavor enhancer comprises furfuryl mercaptan in a concentration of 0.10 ppm to 0.45 ppm, more preferably of 0.20 ppm to 0.40 ppm, and most preferably of 0.30 ppm to 0.35 ppm. For instance, the flavor enhancer comprises about 0.08, 0.23, 0.32 or 0.33 ppm of furfuryl mercaptan.

In an embodiment, the flavor enhancer comprises 2-acetylpyrrole in a concentration of 4.50 ppm to 15.0 ppm, more preferably of 5.00 ppm to 10.0 ppm, and most preferably of 5.50 ppm to 7.00 ppm. For instance, the flavor enhancer comprises about 5.60, 5.70, 6.25 or 12.7 ppm of 2-acetylpyrrole.

In an embodiment, the flavor enhancer comprises furaneol in a concentration of 30.0 ppm to 40.0 ppm, more preferably of 32.0 ppm to 39.0 ppm, and most preferably of 34.0 ppm to 38.0 ppm. For instance, the flavor enhancer comprises about 34.1, 35.9, 37.9 or 39.0 ppm of furaneol.

In an embodiment, the flavor enhancer comprises nor-furaneol in a concentration of 120 ppm to 350 ppm, more preferably of 150 ppm to 300 ppm, and most preferably of 180 ppm to 250 ppm. For instance, the flavor enhancer comprises about 114, 194, 222 or 250 ppm of nor-furaneol.

In an embodiment, the flavor enhancer comprises sulfurol in a concentration of 0.80% to 1.70%, more preferably of 0.90% to 1.40%, and most preferably of 1.00% to 1.25%. For instance, the flavor enhancer comprises about 0.21, 0.90, 1.16 or 1.20% of sulfurol.

In an embodiment, the flavor enhancer comprises proline-valine diketopiperazine in a concentration of 2.00 ppm to 16.0 ppm, more preferably of 5.00 ppm to 14.0 ppm, and most preferably of 8.00 ppm to 12.0 ppm. For instance, the flavor enhancer comprises about 1.07, 2.55, 8.46 or 12.0 ppm of proline-valine diketopiperazine.

In an embodiment, the flavor enhancer comprises proline-isoleucine diketopiperazine in a concentration of 5.00 ppm to 30.00 ppm in a concentration of 10.0 ppm to 26.0 ppm, more preferably of 15.0 ppm to 24.0 ppm, and most preferably of 18.0 ppm to 22.0 ppm. For instance, the flavor enhancer comprises about 3.76, 9.87, 18.9 or 21.1 ppm of proline-isoleucine diketopiperazine.

The flavor enhancer of the present invention typically comprises a variety of other components that may impart a certain odor or taste to the preparation.

The following additional components have been found to be particularly advantageous for further improving the impression of an authentic roasted red meat flavor: 3-methylbutanal, 3-mercapto-2-butanone, 2-ethyl-6-methylpyrazine, 2-methylthiazolidine, 2-isopropylthiazolidine, 2-isobutylthiazolidine, maltol and proline-leucine diketopiperazine.

Therefore, in an embodiment, the flavor enhancer of the present invention further comprises one or more of the following:

- 3-methylbutanal, in particular in a concentration of 1.50 ppm to 8.00 ppm, more preferably of 1.60 ppm to 7.00 ppm, and most preferably of 1.65 ppm to 6.50 ppm;

- 3-mercapto-2-butanone, in particular in a concentration of 0.10 ppm to 0.60 ppm, more preferably of 0.20 ppm to 0.50 ppm, and most preferably of 0.30 ppm to 0.40 ppm;

- 2-ethyl-6-methylpyrazine, in particular in a concentration of 0.05 ppm to 2.00 ppm, more preferably of 0.10 ppm to 1.50 ppm, and most preferably of 0.12 ppm to 1.20 ppm;

- 2-methylthiazolidine, in particular in a concentration of 0.01 ppm to 0.25 ppm, more preferably of 0.02 ppm to 0.20 ppm, and most preferably of 0.03 ppm to 0.15 ppm;

- 2-isopropylthiazolidine, in particular in a concentration of 0.05 ppm to 1.50 ppm, more preferably of 0.08 ppm to 1.00 ppm, and most preferably of 0.10 ppm to 0.80 ppm;

- 2-isobutylthiazolidine, in particular in a concentration of 0.50 ppm to 5.00 ppm, more preferably of 1.00 ppm to 3.00 ppm, and most preferably of 1.50 ppm to 2.50 ppm;

- maltol, in particular in a concentration of 1.00 ppm to 12.0 ppm, more preferably of 1.50 ppm to 10.0 ppm, and most preferably of 1.75 ppm to 8.00 ppm; and/or

- proline-leucine diketopiperazine, in particular in a concentration of 8.00 ppm to 20.0 ppm, more preferably of 12.0 ppm to 17.0 ppm, and most preferably of 14.0 ppm to 15.0 ppm.

The flavor enhancers of the present invention are typically in solid form. Alternatively, they could also be provided in the form of a paste, suspension or a solution, e.g. a slurry or an emulsion.

Preferably, the flavor enhancers of the present invention are in the form of a granulate or powder. To this end, the flavor enhancer may be granulated, milled and/or sieved.

The flavor enhancers of the present invention may represent a complete flavor composition that may be blended with a food or beverage to impart flavor thereto, or modify or improve the flavor thereof. Alternatively, the flavor enhancer may form only a part of a complete flavor composition, and it can be mixed with other flavor ingredients to form the complete flavor composition. A skilled flavorist will be able to mix the flavor enhancers of the present invention with other known ingredients employed in flavor compositions to develop a wide variety of complete flavor compositions to satisfy the requirements of the food and beverage industry.

The flavor enhancer of the present invention is highly versatile and may be used in a wide variety of food products to impart the desired roasted red meat impression. For instance, it may be employed with meat-containing or meat-based foods or vegetable-type foodstuffs, such as condensed soups, dried meats, packaged gravies, casseroles, etc., in order to supplement or enhance these foods. The may also be employed with non-meat sources of protein, for example, so as to make them more palatable and meat-like.

The present disclosure also provides a food product comprising the flavor enhancer of the present invention.

The food product may be any kind of foodstuff for which a roasted, meaty flavor note is desirable. Examples of food products include, but are not limited to, meat products, e.g. meatballs, fresh or raw sausage preparations, and seasoned or marinated fresh or salt meat products; baked products; snack foods, e.g. baked or fried potato chips or potato dough products, bread dough products and corn or peanut-based extrudates; pet food; canned food; casserole dishes; frozen human foods; spice blends; condiments; marinades; fermented products; ready-to-heat foods; ready-to-eat meals; seasoning preparations; sauces; gravies; soups; bouillon; stocks; fonds; meat spreads and dips; meat analogues, such as burgers, sausages, minced meat or steaks, for instance; and noodles.

The flavor enhancer of the present invention can make a general improvement to the flavor of these food products. They may be added to the food product by simple mixing with other ingredients in the final blending of a comestible, such as a convenience food. Alternatively, they may be added to the outside of a comestible, for example, by the process of dusting or spray coating a snack food. Still further, the flavor enhancer may be added to a comestible during its formation, in a process which is sometimes referred to as internal flavoring.

The flavor enhancer of the present invention is not restricted to beef flavors, but can also be used in other red meat flavors, e.g. pork, lamb or game, as well as in vegan creations. Also, they work well in roasted, grilled or boiled meat flavors.

The flavor enhancer of the present invention may be mixed with other process flavors to create a complete flavor composition. For instance, it may be mixed with other top notes and/or with nonvolatile taste components. It may also be combined with other traditional modules, like yeast extracts, spices and/or meat top notes, for example.

Other known ingredients useful in complete flavor compositions may be added to the slurry before the formation of the flavor enhancer, or they may be blended with the flavor enhancer after it is formed, or both.

A complete flavor composition may comprise a flavor enhancer as described herein; aroma volatiles and other flavor ingredients generally known in the art; and other synergists or enhancers, such as fats or fatty acids, or their sources, herbs, spices and the like; pH regulators; inorganic salts; taste masking agents, taste sensates; vitamins; dyes; colorants; pigments, and the like.

Other ingredients include aldehyde and ketone sources, including acetaldehyde, propanal, butanal, methylpropanal, C3 to C5 alkanals, HVP, alpha diketones and sources thereof, including butanedione, pentane-2,3-dione, pyruvaldehyde, pyruvic acid, glyceraldehyde, glyoxal, dihydroxyacetone, alpha-ketobutyric acid, heptane-3,4-dione-2,5-diacetate, HMFone, HDFone, and related derivatives, ascorbic acid, 5-ketogluconic acid, cyclotene, maltol, lactic acid, glycolic acid, malic acid, tartaric acid, and protein hydrolysates.

In addition to the aforementioned ingredients, a complete flavor composition may contain carrier materials. Carrier materials are employed, particularly when the complete flavor composition is presented in the form of a powder, as flow aids, or extenders, or to provide physical stability to the powder by modifying the glass transition temperature (Tg) of the powder.

The flavor enhancer of the present invention is particularly advantageous for solid flavor compositions.

It may be used in water-based, fat-based and mixed systems.

The flavor enhancers of the present invention are typically stronger and more concentrated than conventional compositions prepared by oven drying. Consequently, the amount used may be reduced compared to conventional flavor modules.

The dosage or concentration of the flavor enhancer in a complete flavor formulation or food product may be chosen according to the desired impact and application.

A typical dosage of the flavor enhancer in a complete flavor formulation is in the range of 5-30% by weight; but higher or lower dosages may also be used.

Typically, meat-based food products contain about 0.2-0.3% of flavor, but higher or lower dosages may also be used. Vegetarian or vegan alternatives generally require a higher flavor concentration, for instance up to 1%.

In a further aspect, the present invention relates to a method of imparting a roasted red meat flavor to a food product, said method comprising the step of adding to said food product the flavor enhancer of the present invention.

The flavor enhancer may be added to the food product at any point during the production of the food product. For instance, it may be mixed in with other ingredients during the formation of the food product or also be applied to the food product, e.g. injected or coated thereon.

In a further aspect, the present invention relates to a method of preparing the flavor enhancer of the present invention. Said method involves concomitant reaction and drying of the material in a microwave.

More specifically, the method comprises the steps of:

(i) providing starting materials; and
(ii) reacting the starting materials and at the same time drying the resulting material in a microwave oven to obtain the flavor enhancer,

wherein the starting materials include at least a protein source or fragments of proteins or other materials with an amino functionality, and wherein the starting materials further include a reducing sugar or a source of reducing sugar or reducing carbohydrates.

A suitable method is described in WO 2018/083224, for instance.

The starting materials are typically solids or liquids.

In an embodiment, the starting materials are introduced into the microwave in the form of a slurry or an emulsion, in particular an aqueous slurry. A typical water content is about 20-30%, but a lower water content would also be possible. Slurries may also be fat-based, or based on a mixture of water and fat.

The starting materials include at least a protein source or fragments of proteins or other materials with an amino functionality.

In most cases, the starting materials further include a reducing sugar or a source of reducing sugar or other carbohydrates.

Optionally, the starting materials may further include fats, extracts (e.g. from plants and/or meat), spices, salts, carriers, fibers, vegetable-, fruit- or animal-derived powders, acids, or other common additives.

The starting materials, and in particular a slurry containing the starting materials, may be introduced into the microwave oven in the form of a film, which may be formed by casting, pouring or pumping the slurry onto an evaporation surface, for instance. The thickness of the film is selected having regard for considerations that the slurry must be dehydrated within a period of time in which the desired flavoring preparation is generated. It is also necessary for the incident microwave radiation to penetrate the film to ensure efficient and uniform heating.

The resulting product may be a flavoring preparation or a thermal process flavoring ("reaction flavor") as defined in Regulation (EC) No 1334/2008.

The use of a microwave oven for reacting and at the same time drying the material allows for much shorter processing times, compared to conventional methods where the drying occurs in a separate step after the reaction. The synthesis of the flavoring preparation and its dehydration occur essentially simultaneously in a single step.

Any industrial microwave ovens may be employed in the method according to the present invention. Suitable microwave ovens include a 30kW /915 MHz (50 kVA) up to 100 kW /915 MHz (150 kVA); or a 100 W/2450 MHz (0.15kVA) up to 30 kW/2450MHz (45kVA).

Microwave energy input may be typically in the range of 3-100 kW, or even higher, preferably 30-100 kW.

The resulting flavor enhancers typically have a water content of about 0.1 to 5.0% by weight, more preferably of about 0.5 to 3.0%.

Reaction times and temperatures may be adapted according to the starting materials and desired product, in particular the desired grade of processing. For instance, the reaction and drying step may be conducted at a temperature of about 100 to 180 °C for about 30 s to 15 min.

The reaction and drying step may be conducted batch-wise or continuously.

After passing through the microwave oven, the resultant flavor enhancer may be presented in the form of a viscous paste, cake, ribbon, or the like.

At this stage, it may be subjected to further processing steps. For example, the flavor enhancer may be milled, ground and/or graded by sieving to render it in the form of a powder, granule or the like, having a desired particle size.

The present invention is thus further illustrated by means of the following examples:

Example 1: Preparation of solid roasted red meat flavor enhancer

In an adequate beaker, a suspension/emulsion of starting materials was pre-pared. To assure proper reaction slurry quality and homogeneity, the beaker was equipped with a high shear stirring unit (Polytron PT6100, Kinematica, Littau, Switzerland).

The following materials were added to the beaker in the given order:

    170.0 g water
    150.0 g yeast autolysate (Lesaffre, Cedar Rapids, USA)
    120.0 g Soy sauce powder (Ajinomoto, Tokyo, Japan)
    20.5 g L-Cystine (Wacker Chemie, Burghausen, Germany)
    30.0 g Apple syrup (Austria Juice, Kroellendorf, Austria)
    10.7 g L-Lysine (Bachem, Bubendorf, Switzerland)
    50.0 g Thiamine Hydrochloride (DSM, Sisseln, Switzerland)
    40.0 g Sunflower oil (Florin, Muttenz, Switzerland)
    320.0 g Maltodextrin DE6 (AVEBE, Veendam, The Netherlands)

Under vigorous stirring, the pH of the slurry was adjusted to 7.6 by slowly adding 155 ml 4M NaOH. The resulting slurry was processed in a MWS flexiWAVE microwave oven (Heerbrugg, Switzerland) as outlined below:
In a crystallizing dish, 90.0 g of the above slurry was subjected to a phased microwave regime (1 min at 400 W; 2.25 min at 800 W). Gentle to vigorous foaming was observed and the slurry temperature rose from room temperature to about 100-125 °C. Towards the end of processing, the slurry started to solidify and formed a relatively homogeneous, brittle solid upon cooling.

The dry, foamed solid was milled (Retsch ZM 100, Germany) under controlled atmosphere to obtain the flavor enhancer of the present invention. Water content of the final powder was 3.5% (Moisture Analyser HB 43, Mettler-Toledo, Switzerland).

Functional organoleptic evaluation and comparison of microwaved product against conventional processed product allowed a 10-30% dose reduction at equal taste impact. The microwave processed product was characterized by the following descriptors: Sharper, still complex profile, more roasted, and providing a significantly strengthened, authentic red meat (beef type) tonality in taste and aroma.

Example 2: Analysis of solid roasted red meat flavors

The compositions of three flavor enhancers according to the present invention (Samples A, B and C; Sample D does not form part of the invention) were compared to that of a red meat flavor composition prepared by conventional oven drying (Sample E).

To this end, 10 g of each sample was dissolved in 20 ml water and 0.5 ml tert-butyl methyl ether containing 0.5 mg of an internal standard was added. The thus obtained mixture was extracted three times with 20 ml tert-butyl methyl ether. The combined organic phases were concentrated on a vigreux column to a final volume of 3 ml. The extract was analyzed by GC-MS/FID (Agilent GC 7890B connected to an Agilent MSD 5977B) equipped with a capillary column (Innowax 60 m x 0.32 iD x 0.25 ft, Agilent). Concentrations were calculated using the following formula:

$$c_{Target} = c_{STD} * Area_{Target} / Area_{STD}$$

where $c_{Target}$ is the concentration of the flavor constituent, $c_{STD}$ is the concentration of the internal standard, $Area_{Target}$ is the FID area of the constituent and $Area_{STD}$ is the FID area of the standard. The four samples were found to contain the following key components:

| Constituent | Sample A [ppm] | Sample B [ppm] | Sample C [ppm] | Sample D [ppm] | Sample E [ppm] |
|---|---|---|---|---|---|
| 2-methylbutanal | 0.881 | 0.706 | 1.180 | --- | 0.512 |
| trans-2-methyl-1-butene-1-thiol | 0.168 | 0.219 | 0.033 | --- | --- |
| cis-2-methyl-1-butene-1-thiol | 0.416 | 0.465 | 0.079 | 0.147 | --- |
| 2-methyl-3-furanthiol | 1.050 | 1.260 | 0.129 | 0.057 | 0.026 |
| 2,5-dimethylpyrazine | 0.248 | 0.270 | 0.057 | 0.458 | --- |
| 2,6-dimethylpyrazine | 0.158 | 0.172 | 0.103 | 0.221 | --- |
| 2,3-dimethylpyrazine | 0.075 | 0.074 | 0.074 | 0.225 | 0.053 |
| 2-methyl-4,5-dihydrofuran-3-thiol | 6.980 | 7.870 | 7.640 | 1.240 | 3.950 |
| trimethylpyrazine | 0.175 | 0.158 | 0.369 | 0.689 | 0.037 |
| furfuryl mercaptan | 0.316 | 0.324 | 0.080 | 0.231 | --- |
| 2-acetylpyrrole | 5.500 | 5.700 | 6.250 | 12.70 | 4.690 |
| furaneol | 34.10 | 37.90 | 39.00 | 35.90 | 42.70 |
| nor-furaneol | 194.0 | 250.0 | 222.0 | 114.0 | 111.0 |
| sulfurol | 11'600 | 12'500 | 9'020 | 2'070 | 5'550 |
| proline-valine diketopiperazine | 8.460 | 12.00 | 2.550 | 1.070 | 1.060 |
| proline-isoleucine diketopiperazine | 18.90 | 21.10 | 9.870 | 3.760 | 3.040 |
| 3-methylbutanal | | | 1.690 | 6.200 | 1.150 |
| 3-mercapto-2-butanone | | | 0.332 | 0.711 | --- |
| 2-ethyl-6-methylpyrazine | | | 1.040 | 0.139 | --- |
| 2-methylthiazolidine | | | 0.042 | 0.123 | --- |
| 2-isopropylthiazolidine | | | 0.111 | 0.789 | 0.396 |
| 2-isobutylthiazolidine | | | 1.560 | 2.060 | 0.354 |
| maltol | | | 1.750 | 6.310 | 2.640 |
| proline-leucine diketopiperazine | | | 14.80 | 5.930 | 6.270 |

Example 3: Potato Crisps

Plain potato crisps were warmed up in an oven (80 °C) for half an hour until the crisps were warm and crunchy, then coated with the following four seasonings by dusting-on.

- Seasoning 1: 5% RTE salt flavor (salt, monosodium glutamate, Ribotide, yeast powder, organic acid, creamer, whey powder)
- Seasoning 2: 5% RTE salt flavor (salt, monosodium glutamate, Ribotide, yeast powder, organic acid, creamer, whey powder) + 0.4% RTE of the red meat flavor enhancer of example 1
- Seasoning 3: 6% RTE barbecue flavor (whey powder, sugar, salt, onion, monosodium glutamate, tomato, hot paprika, maltodextrin, garlic, disodium 5'-guanylate, organic acids, yeast powder, meat flavoring, smoke flavoring)
- Seasoning 4: 6% RTE barbecue flavor (whey powder, sugar, salt, onion, monosodium glutamate, tomato, hot paprika, maltodextrin, garlic, disodium 5'-guanylate, organic acids, yeast powder, meat flavoring, smoke flavoring) + 0.24% RTE of the red meat flavor enhancer of example 1.

The four potato crisp samples were then assessed by four flavorists.

Seasoning 1 provides a salty, umami, bouillon-like flavor profile.

The potato crisps with Seasoning 2 were described as juicy, meaty, body, steak profile, nutty, crusty, iron metallic of red meat, with a baked note.

The potato crisps with Seasoning 4 were described as more crusty, more meaty and with an enhanced chargrilled note compared to those with Seasoning 3.

Example 4: Taco Seasoning

Ground beef (80% meat / 20% fat) was cooked and drained. The cooked ground beef was seasoned with a taco seasoning containing 1.5% of the red meat flavor enhancer of example 1. The following ratios were used:

| | |
|---|---|
| Beef 80/20 | 70.000% |
| Chili powder | 1.525% |
| Garlic powder | 0.104% |
| Onion powder | 0.104% |
| Oregano | 0.104% |
| Paprika powder | 0.208% |
| Cumin | 0.624% |
| Salt | 0.416% |
| Black pepper | 0.416% |
| Drinking water | 25.000% |
| Red meat flavor preparation of example 1 | 1.500% |

It was found that the flavor enhancer of the present invention increases the overall savory taste and oven roasted beef notes. In addition, it provides body and complexity to the recipe.

**Claims**

1. Flavor enhancer for providing a roasted red meat flavor, the flavor enhancer comprising at least 14 of the following marker components in the indicated concentrations:

   - 2-methylbutanal in a concentration of 0.50 ppm to 2.00 ppm;
   - 2-methyl-1-butene-1-thiol in a concentration of 0.10 ppm to 1.00 ppm;
   - 2-methyl-3-furanthiol in a concentration of 0.05 ppm to 2.00 ppm;
   - 2,5-dimethylpyrazine in a concentration of 0.05 ppm to 0.50 ppm;
   - 2,6-dimethylpyrazine in a concentration of 0.05 ppm to 0.50 ppm;
   - 2,3-dimethylpyrazine in a concentration of 0.05 ppm to 0.30 ppm;
   - 2-methyl-4,5-dihydrofuran-3-thiol in a concentration of 5.00 ppm to 12.0 ppm;
   - trimethylpyrazine in a concentration of 0.10 ppm to 0.80 ppm;

- furfuryl mercaptan in a concentration of 0.05 ppm to 0.50 ppm;
- 2-acetylpyrrole in a concentration of 4.00 ppm to 20.00 ppm;
- furaneol in a concentration of 25.0 ppm to 45.0 ppm;
- nor-furaneol in a concentration of 100 ppm to 400 ppm;
- sulfurol in a concentration of 0.70% to 2.00%;
- proline-valine diketopiperazine in a concentration of 1.00 ppm to 20.0 ppm; and
- proline-isoleucine diketopiperazine in a concentration of 3.50 ppm to 30.0 ppm.

2. The flavor enhancer according to claim 1, comprising 2-methylbutanal in a concentration of 0.60 ppm to 1.50 ppm, more preferably of 0.65 ppm to 1.20 ppm, and most preferably of 0.70 ppm to 1.00 ppm.

3. The flavor enhancer according to claim 1 or 2, comprising 2-methyl-1-butene-1-thiol in a concentration of 0.20 ppm to 0.90 ppm, more preferably of 0.30 ppm to 0.80 ppm, and most preferably of 0.50 ppm to 0.70 ppm.

4. The flavor enhancer according to any one of claims 1 to 3, comprising 2-methyl-3-furanthiol in a concentration of 0.10 ppm to 1.70 ppm, more preferably of 0.50 ppm to 1.50 ppm, and most preferably of 1.00 ppm to 1.30 ppm.

5. The flavor enhancer according to any one of claims 1 to 4, comprising 2,5-dimethylpyrazine in a concentration of 0.10 ppm to 0.40 ppm, more preferably of 0.20 ppm to 0.35 ppm, and most preferably of 0.25 ppm to 0.30 ppm.

6. The flavor enhancer according to any one of claims 1 to 5, comprising 2,6-dimethylpyrazine in a concentration of 0.10 ppm to 0.30 ppm, more preferably of 0.12 ppm to 0.25 ppm, and most preferably of 0.15 ppm to 0.20 ppm.

7. The flavor enhancer according to any one of claims 1 to 6, comprising 2,3-dimethylpyrazine in a concentration of 0.06 ppm to 0.25 ppm, more preferably of 0.07 ppm to 0.10 ppm, and most preferably of 0.07 ppm to 0.08 ppm.

8. The flavor enhancer according to any one of claims 1 to 7, comprising 2-methyl-4,5-dihydrofuran-3-thiol in a concentration of 5.50 ppm to 10.0 ppm, more preferably of 6.00 ppm to 9.00 ppm, and most preferably of 6.50 ppm to 8.00 ppm.

9. The flavor enhancer according to any one of claims 1 to 8, comprising trimethylpyrazine in a concentration of 0.12 ppm to 0.60 ppm, more preferably of 0.13 ppm to 0.40 ppm, and most preferably of 0.15 ppm to 0.20 ppm.

10. The flavor enhancer according to any one of claims 1 to 9, comprising furfuryl mercaptan in a concentration of 0.10 ppm to 0.45 ppm, more preferably of 0.20 ppm to 0.40 ppm, and most preferably of 0.30 ppm to 0.35 ppm.

11. The flavor enhancer according to any one of claims 1 to 10, comprising 2-acetylpyrrole in a concentration of 4.50 ppm to 15.00 ppm, more preferably of 5.00 ppm to 10.0 ppm, and most preferably of 5.50 ppm to 7.00 ppm.

12. The flavor enhancer according to any one of claims 1 to 11, comprising furaneol in a concentration of 30.0 ppm to 40.0 ppm, more preferably of 32.0 ppm to 39.0 ppm, and most preferably of 34.0 ppm to 38.0 ppm.

13. The flavor enhancer according to any one of claims 1 to 12, comprising nor-furaneol in a concentration of 120 ppm to 350 ppm, more preferably of 150 ppm to 300 ppm, and most preferably of 180 ppm to 250 ppm.

14. The flavor enhancer according to any one of claims 1 to 13, comprising sulfurol in a concentration of 0.80% to 1.70%, more preferably of 0.90% to 1.40%, and most preferably of 1.00% to 1.25%.

15. The flavor enhancer according to any one of claims 1 to 14, comprising proline-valine diketopiperazine in a concentration of 2.00 ppm to 16.0 ppm, more preferably of 5.00 ppm to 14.0 ppm, and most preferably of 8.00 ppm to 12.0 ppm.

16. The flavor enhancer according to any one of claims 1 to 15, comprising proline-isoleucine diketopiperazine in a concentration of 5.00 ppm to 30.00 ppm in a concentration of 10.0 ppm to 26.0 ppm, more preferably of 15.0 ppm to 24.0 ppm, and most preferably of 18.0 ppm to 22.0 ppm.

17. The flavor enhancer according to any one of claims 1 to 16, further comprising one or more of the following:

- 3-methylbutanal in a concentration of 1.50 ppm to 8.00 ppm, more preferably of 1.60 ppm to 7.00 ppm, and most preferably of 1.65 ppm to 6.50 ppm;
- 3-mercapto-2-butanone in a concentration of 0.10 ppm to 0.60 ppm, more preferably of 0.20 ppm to 0.50 ppm, and most preferably of 0.30 ppm to 0.40 ppm;
- 2-ethyl-6-methylpyrazine in a concentration of 0.05 ppm to 2.00 ppm, more preferably of 0.10 ppm to 1.50 ppm, and most preferably of 0.12 ppm to 1.20 ppm;
- 2-methylthiazolidine in a concentration of 0.01 ppm to 0.25 ppm, more preferably of 0.02 ppm to 0.20 ppm, and most preferably of 0.03 ppm to 0.15 ppm;
- 2-isopropylthiazolidine in a concentration of 0.05 ppm to 1.50 ppm, more preferably of 0.08 ppm to 1.00 ppm, and most preferably of 0.10 ppm to 0.80 ppm;
- 2-isobutylthiazolidine in a concentration of 0.50 ppm to 5.00 ppm, more preferably of 1.00 ppm to 3.00 ppm, and most preferably of 1.50 ppm to 2.50 ppm;
- maltol in a concentration of 1.00 ppm to 12.0 ppm, more preferably of 1.50 ppm to 10.0 ppm, and most preferably of 1.75 ppm to 8.00 ppm; and/or
- proline-leucine diketopiperazine **in** a concentration of 8.00 ppm to 20.0 ppm, more preferably of 12.0 ppm to 17.0 ppm, and most preferably of 14.0 ppm to 15.0 ppm.

18. The flavor enhancer according to any one of claims 1 to 17, wherein the flavoring preparation is a solid flavoring preparation, preferably a granulate or powder.

19. A method of imparting a roasted red meat flavor to a food product, said method comprising the step of adding to said food product the flavor enhancer according to any one of claims 1 to 18.

20. A method of preparing the flavor enhancer according to any one of claims 1 to 18, comprising the steps of:

(i) providing starting materials; and
(ii) reacting the starting materials and at the same time drying the resulting material in a microwave oven to obtain the flavor enhancer;

wherein the starting materials include at least a protein source or fragments of proteins or other materials with an amino functionality, and wherein the starting materials further include a reducing sugar or a source of reducing sugar or other reducing carbohydrates.

**Patentansprüche**

1. Geschmacksverbesserer zur Bereitstellung eines Geschmacks von gebratenem rotem Fleisch, wobei der Geschmacksverbesserer mindestens 14 der folgenden Markerkomponenten in den angegebenen Konzentrationen umfasst:

- 2-Methylbutanal in einer Konzentration von 0.50 ppm bis 2.00 ppm;
- 2-Methyl-1-buten-1-thiol in einer Konzentration von 0.10 ppm bis 1.00 ppm;
- 2-Methyl-3-furanthiol in einer Konzentration von 0.05 ppm bis 2.00 ppm;
- 2,5-Dimethylpyrazin in einer Konzentration von 0.05 ppm bis 0.50 ppm;
- 2,6-Dimethylpyrazin in einer Konzentration von 0.05 ppm bis 0.50 ppm;
- 2,3-Dimethylpyrazin in einer Konzentration von 0.05 ppm bis 0.30 ppm;
- 2-Methyl-4,5-dihydrofuran-3-thiol in einer Konzentration von 5.00 ppm bis 12.0 ppm;
- Trimethylpyrazin in einer Konzentration von 0.10 ppm bis 0.80 ppm;
- Furfurylmercaptan in einer Konzentration von 0.05 ppm bis 0.50 ppm;
- 2-Acetylpyrrol in einer Konzentration von 4.00 ppm bis 20.00 ppm;
- Furaneol in einer Konzentration von 25.0 ppm bis 45.0 ppm;
- Norfuraneol in einer Konzentration von 100 ppm bis 400 ppm;
- Sulfurol in einer Konzentration von 0.70% bis 2.00%;
- Prolin-Valin-Diketopiperazin in einer Konzentration von 1.00 ppm bis 20.0 ppm; und
- Prolin-Isoleucin-Diketopiperazin in einer Konzentration von 3.50 ppm bis 30.0 ppm.

2. Der Geschmacksverbesserer nach Anspruch 1, umfassend 2-Methylbutanal in einer Konzentration von 0.60 ppm bis 1.50 ppm, bevorzugter von 0.65 ppm bis 1.20 ppm und am meisten bevorzugt von 0.70 ppm bis 1.00 ppm.

3. Der Geschmacksverbesserer nach Anspruch 1 oder 2, umfassend 2-Methyl-1-buten-1-thiol in einer Konzentration von 0.20 ppm bis 0.90 ppm, bevorzugter von 0.30 ppm bis 0.80 ppm und am meisten bevorzugt von 0.50 ppm bis 0.70 ppm.

4. Der Geschmacksverbesserer nach einem der Ansprüche 1 bis 3, umfassend 2-Methyl-3-furanthiol in einer Konzentration von 0.10 ppm bis 1.70 ppm, bevorzugter von 0.50 ppm bis 1.50 ppm und am meisten bevorzugt von 1.00 ppm bis 1.30 ppm.

5. Der Geschmacksverbesserer nach einem der Ansprüche 1 bis 4, umfassend 2,5-Dimethylpyrazin in einer Konzentration von 0.10 ppm bis 0.40 ppm, bevorzugter von 0.20 ppm bis 0.35 ppm und am meisten bevorzugt von 0.25 ppm bis 0.30 ppm.

6. Der Geschmacksverbesserer nach einem der Ansprüche 1 bis 5, umfassend 2,6-Dimethylpyrazin in einer Konzentration von 0.10 ppm bis 0.30 ppm, bevorzugter von 0.12 ppm bis 0.25 ppm und am meisten bevorzugt von 0.15 ppm bis 0.20 ppm.

7. Geschmacksverstärker nach einem der Ansprüche 1 bis 6, umfassend 2,3-Dimethylpyrazin in einer Konzentration von 0.06 ppm bis 0.25 ppm, bevorzugter von 0.07 ppm bis 0.10 ppm und am meisten bevorzugt von 0.07 ppm bis 0.08 ppm.

8. Der Geschmacksverbesserer nach einem der Ansprüche 1 bis 7, umfassend 2-Methyl-4,5-dihydrofuran-3-thiol in einer Konzentration von 5.50 ppm bis 10.0 ppm, bevorzugter von 6.00 ppm bis 9.00 ppm und am meisten bevorzugt von 6.50 ppm bis 8.00 ppm.

9. Der Geschmacksverbesserer nach einem der Ansprüche 1 bis 8, umfassend Trimethylpyrazin in einer Konzentration von 0.12 ppm bis 0.60 ppm, bevorzugter von 0.13 ppm bis 0.40 ppm und am meisten bevorzugt von 0.15 ppm bis 0.20 ppm.

10. Der Geschmacksverbesserer nach einem der Ansprüche 1 bis 9, umfassend Furfurylmercaptan in einer Konzentration von 0.10 ppm bis 0.45 ppm, bevorzugter von 0.20 ppm bis 0.40 ppm und am meisten bevorzugt von 0.30 ppm bis 0.35 ppm.

11. Der Geschmacksverbesserer nach einem der Ansprüche 1 bis 10, umfassend 2-Acetylpyrrol in einer Konzentration von 4.50 ppm bis 15.00 ppm, bevorzugter von 5.00 ppm bis 10.0 ppm und am meisten bevorzugt von 5.50 ppm bis 7.00 ppm.

12. Der Geschmacksverbesserer nach einem der Ansprüche 1 bis 11, umfassend Furaneol in einer Konzentration von 30.0 ppm bis 40.0 ppm, bevorzugter von 32.0 ppm bis 39.0 ppm und am meisten bevorzugt von 34.0 ppm bis 38.0 ppm.

13. Der Geschmacksverbesserer nach einem der Ansprüche 1 bis 12, umfassend Norfuraneol in einer Konzentration von 120 ppm bis 350 ppm, bevorzugter von 150 ppm bis 300 ppm und am meisten bevorzugt von 180 ppm bis 250 ppm.

14. Der Geschmacksverbesserer nach einem der Ansprüche 1 bis 13, umfassend Sulfurol in einer Konzentration von 0.80% bis 1.70%, bevorzugter von 0.90% bis 1.40% und am meisten bevorzugt von 1.00% bis 1.25%.

15. Der Geschmacksverbesserer nach einem der Ansprüche 1 bis 14, umfassend Prolin-Valin-Diketopiperazin in einer Konzentration von 2.00 ppm bis 16.0 ppm, bevorzugter von 5.00 ppm bis 14.0 ppm und am meisten bevorzugt von 8.00 ppm bis 12.0 ppm.

16. Der Geschmacksverbesserer nach einem der Ansprüche 1 bis 15, umfassend Prolin-Isoleucin-Diketopiperazin in einer Konzentration von 5.00 ppm bis 30.00 ppm, in einer Konzentration von 10.0 ppm bis 26.0 ppm, bevorzugter von 15.0 ppm bis 24.0 ppm und am meisten bevorzugt von 18.0 ppm bis 22.0 ppm.

17. Der Geschmacksverbesserer nach einem der Ansprüche 1 bis 16, ferner umfassend eines oder mehrere der Folgenden:

   - 3-Methylbutanal in einer Konzentration von 1.50 ppm bis 8.00 ppm, bevorzugter von 1.60 ppm bis 7.00 ppm und am meisten bevorzugt von 1.65 ppm bis 6.50 ppm;

- 3-Mercapto-2-butanon in einer Konzentration von 0.10 ppm bis 0.60 ppm, bevorzugter von 0.20 ppm bis 0.50 ppm und am meisten bevorzugt von 0.30 ppm bis 0.40 ppm;

- 2-Ethyl-6-methylpyrazin in einer Konzentration von 0.05 ppm bis 2.00 ppm, bevorzugter von 0.10 ppm bis 1.50 ppm und am meisten bevorzugt von 0.12 ppm bis 1.20 ppm;

- 2-Methylthiazolidin in einer Konzentration von 0.01 ppm bis 0.25 ppm, bevorzugter von 0.02 ppm bis 0.20 ppm und am meisten bevorzugt von 0.03 ppm bis 0.15 ppm;

- 2-Isopropylthiazolidin in einer Konzentration von 0.05 ppm bis 1.50 ppm, bevorzugter von 0.08 ppm bis 1.00 ppm und am meisten bevorzugt von 0.10 ppm bis 0.80 ppm;

- 2-Isobutylthiazolidin in einer Konzentration von 0.50 ppm bis 5.00 ppm, bevorzugter von 1.00 ppm bis 3.00 ppm und am meisten bevorzugt von 1.50 ppm bis 2.50 ppm;

- Maltol in einer Konzentration von 1.00 ppm bis 12.0 ppm, bevorzugter von 1.50 ppm bis 10.0 ppm und am meisten bevorzugt von 1.75 ppm bis 8.00 ppm; und/oder

- Prolin-Leucin-Diketopiperazin in einer Konzentration von 8.00 ppm bis 20.0 ppm, bevorzugter von 12.0 ppm bis 17.0 ppm und am meisten bevorzugt von 14.0 ppm bis 15.0 ppm.

18. Der Geschmacksverbesserer nach einem der Ansprüche 1 bis 17, wobei es sich bei der Geschmacksstoffzubereitung um eine feste Geschmacksstoffzubereitung, bevorzugt ein Granulat oder Pulver, handelt.

19. Verfahren zur Verleihung eines Geschmacks von gebratenem rotem Fleisch an ein Lebensmittelprodukt, wobei das Verfahren den Schritt umfasst, dass der Geschmacksverbesserer nach einem der Ansprüche 1 bis 18 dem Lebensmittelprodukt hinzugefügt wird.

20. Verfahren zur Herstellung des Geschmacksverbesserers nach einem der Ansprüche 1 bis 18, umfassend die Schritte:

(i) Bereitstellen von Ausgangsmaterialien; und
(ii) Reagieren der Ausgangsmaterialien und gleichzeitiges Trocknen des resultierenden Materials in einem Mikrowellenofen unter Erhalt des Geschmacksverbesserers;

wobei die Ausgangsmaterialien mindestens eine Proteinquelle oder Fragmente von Proteinen oder andere Materialien mit einer Aminofunktionalität enthalten und wobei die Ausgangsmaterialien ferner einen reduzierenden Zucker oder eine Quelle von reduzierendem Zucker oder andere reduzierende Kohlenhydrate enthalten.

**Revendications**

1. Améliorant de goût pour donner un goût de viande rouge rôtie, l'améliorant de goût comprenant au moins 14 des composants marqueurs suivants aux concentrations indiquées:

- 2-méthylbutanal en une concentration de 0.50 ppm à 2.00 ppm;
- 2-méthyl-1-butène-1-thiol en une concentration de 0.10 ppm à 1.00 ppm;
- 2-méthyl-3-furanethiol en une concentration de 0.05 ppm à 2.00 ppm;
- 2,5-diméthylpyrazine en une concentration de 0.05 ppm à 0.50 ppm;
- 2,6-diméthylpyrazine en une concentration de 0.05 ppm à 0.50 ppm;
- 2,3-diméthylpyrazine en une concentration de 0.05 ppm à 0.30 ppm;
- 2-méthyl-4,5-dihydrofurane-3-thiol en une concentration de 5.00 ppm à 12.0 ppm;
- triméthylpyrazine en une concentration de 0.10 ppm à 0.80 ppm;
- furfurylmercaptan en une concentration de 0.05 ppm à 0.50 ppm;
- 2-acétylpyrrole en une concentration de 4.00 ppm à 20.00 ppm;
- furanéol en une concentration de 25.0 ppm à 45.0 ppm;
- nor-furanéol en une concentration de 100 ppm à 400 ppm;
- sulfurol en une concentration de 0.70% à 2.00%;
- proline-valine dicétopipérazine en une concentration de 1.00 ppm à 20.0 ppm; et
- proline-isoleucine dicétopipérazine en une concentration de 3.50 ppm à 30.0 ppm.

2. L'améliorant de goût selon la revendication 1, comprenant du 2-méthylbutanal en une concentration de 0.60 ppm à 1.50 ppm, plus préférablement de 0.65 ppm à 1.20 ppm, et le plus préférablement de 0.70 ppm à 1.00 ppm.

**3.** L'améliorant de goût selon la revendication 1 ou 2, comprenant du 2-méthyl-1-butène-1-thiol en une concentration de 0.20 ppm à 0.90 ppm, plus préférablement de 0.30 ppm à 0.80 ppm, et le plus préférablement de 0.50 ppm à 0.70 ppm.

**4.** L'améliorant de goût selon l'une quelconque des revendications 1 à 3, comprenant du 2-méthyl-3-furanethiol en une concentration de 0.10 ppm à 1.70 ppm, plus préférablement de 0.50 ppm à 1.50 ppm, et le plus préférablement de 1.00 ppm à 1.30 ppm.

**5.** L'améliorant de goût selon l'une quelconque des revendications 1 à 4, comprenant de la 2,5-diméthylpyrazine en une concentration de 0.10 ppm à 0.40 ppm, plus préférablement de 0.20 ppm à 0.35 ppm, et le plus préférablement de 0.25 ppm à 0.30 ppm.

**6.** L'améliorant de goût selon l'une quelconque des revendications 1 à 5, comprenant de la 2,6-diméthylpyrazine en une concentration de 0.10 ppm à 0.30 ppm, plus préférablement de 0.12 ppm à 0.25 ppm, et le plus préférablement de 0.15 ppm à 0.20 ppm.

**7.** L'améliorant de goût selon l'une quelconque des revendications 1 à 6, comprenant de la 2,3-diméthylpyrazine en une concentration de 0.06 ppm à 0.25 ppm, plus préférablement de 0.07 ppm à 0.10 ppm, et le plus préférablement de 0.07 ppm à 0.08 ppm.

**8.** L'améliorant de goût selon l'une quelconque des revendications 1 à 7, comprenant du 2-méthyl-4,5-dihydrofurane-3-thiol en une concentration de 5.50 ppm à 10.0 ppm, plus préférablement de 6.00 ppm à 9.00 ppm, et le plus préférablement de 6.50 ppm à 8.00 ppm.

**9.** L'améliorant de goût selon l'une quelconque des revendications 1 à 8, comprenant de la triméthylpyrazine en une concentration de 0.12 ppm à 0.60 ppm, plus préférablement de 0.13 ppm à 0.40 ppm, et le plus préférablement de 0.15 ppm à 0.20 ppm.

**10.** L'améliorant de goût selon l'une quelconque des revendications 1 à 9, comprenant du furfurylmercaptan en une concentration de 0.10 ppm à 0.45 ppm, plus préférablement de 0.20 ppm à 0.40 ppm, et le plus préférablement de 0.30 ppm à 0.35 ppm.

**11.** L'améliorant de goût selon l'une quelconque des revendications 1 à 10, comprenant du 2-acétylpyrrole en une concentration de 4.50 ppm à 15.00 ppm, plus préférablement de 5.00 ppm à 10.0 ppm, et le plus préférablement de 5.50 ppm à 7.00 ppm.

**12.** L'améliorant de goût selon l'une quelconque des revendications 1 à 11, comprenant du furanéol en une concentration de 30.0 ppm à 40.0 ppm, plus préférablement de 32.0 ppm à 39.0 ppm, et le plus préférablement de 34.0 ppm à 38.0 ppm.

**13.** L'améliorant de goût selon l'une quelconque des revendications 1 à 12, comprenant du nor-furanéol en une concentration de 120 ppm à 350 ppm, plus préférablement de 150 ppm à 300 ppm, et le plus préférablement de 180 ppm à 250 ppm.

**14.** L'améliorant de goût selon l'une quelconque des revendications 1 à 13, comprenant du sulfurol en une concentration de 0.80% à 1.70%, plus préférablement de 0.90% à 1.40%, et le plus préférablement de 1.00% à 1.25%.

**15.** L'améliorant de goût selon l'une quelconque des revendications 1 à 14, comprenant de la proline-valine dicétopipérazine en une concentration de 2.00 ppm à 16.0 ppm, plus préférablement de 5.00 ppm à 14.0 ppm, et le plus préférablement de 8.00 ppm à 12.0ppm.

**16.** L'améliorant de goût selon l'une quelconque des revendications 1 à 15, comprenant de la proline-isoleucine dicétopipérazine en une concentration de 5.0 ppm à 30.0 ppm, en une concentration de 10.0 ppm à 26.0 ppm, plus préférablement de 15.0 ppm à 24.0 ppm, et le plus préférablement de 18.0 ppm à 22.0 ppm.

**17.** L'améliorant de goût selon l'une quelconque des revendications 1 à 16, comprenant en outre un ou plusieurs des ingrédients suivants :

   - 3-méthylbutanal en une concentration de 1.50 ppm à 8.00 ppm, plus préférablement de 1.60 ppm à 7.00 ppm, et le plus préférablement de 1.65 ppm à 6.50 ppm;

- 3-mercapto-2-butanone en une concentration de 0.10 ppm à 0.60 ppm, plus préférablement de 0.20 ppm à 0.50 ppm, et le plus préférablement de 0.30 ppm à 0.40 ppm;

- 2-éthyl-6-méthylpyrazine en une concentration de 0.05 ppm à 2.00 ppm, plus préférablement de 0.10 ppm à 1.50 ppm, et le plus préférablement de 0.12 ppm à 1.20 ppm;

- 2-méthylthiazolidine en une concentration de 0.01 ppm à 0.25 ppm, plus préférablement de 0.02 ppm à 0.20 ppm, et le plus préférablement de 0.03 ppm à 0.15 ppm;

- 2-isopropyl-thiazolidine en une concentration de 0.05 ppm à 1.50 ppm, plus préférablement de 0.08 ppm à 1.00 ppm, et le plus préférablement de 0.10 ppm à 0.80 ppm;

- 2-isobutylthiazolidine en une concentration de 0.50 ppm à 5.00 ppm, plus préférablement de 1.00 ppm à 3.00 ppm, et le plus préférablement de 1.50 ppm à 2.50 ppm;

- maltol en une concentration de 1.00 ppm à 12.0 ppm, plus préférablement de 1.50 ppm à 10.0 ppm, et le plus préférablement de 1.75 ppm à 8.00 ppm; et/ou

- proline-leucine dicétopipérazine en une concentration de 8.00 ppm à 20.0 ppm, plus préférablement de 12.0 ppm à 17.0 ppm, et le plus préférablement de 14.0 ppm à 15.0 ppm.

18. L'améliorant de goût selon l'une quelconque des revendications 1 à 17, dans lequel la préparation aromatisante est une préparation aromatisante solide, de préférence un granulé ou une poudre.

19. Procédé pour conférer un goût de viande rouge rôtie à un produit alimentaire, ledit procédé comprenant l'étape d'ajout audit produit alimentaire de l'améliorant de goût selon l'une quelconque des revendications 1 à 18.

20. Procédé de préparation de l'améliorant de goût selon l'une quelconque des revendications 1 à 18, comprenant les étapes de:

(i) fourniture de matières premières; et
(ii) mise en réaction des matières premières et en même temps séchage de la matière résultante dans un four à micro-ondes pour obtenir l'améliorant de goût;

dans lequel les matières premières comportent au moins une source de protéines ou des fragments de protéines ou d'autres matières ayant une fonctionnalité amino, et dans lequel les matières premières comportent en outre un sucre réducteur ou une source de sucre réducteur ou d'autres glucides réducteurs.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018083224 A